# EUROPÄISCHE PATENTSCHRIFT

(11) **EP 3 293 436 B1**
(45) Veröffentlichungstag und Bekanntmachung des Hinweises auf die Patenterteilung: **29.08.2018**
(21) Anmeldenummer: 16188311.1
(22) Anmeldetag: 12.09.2016
(51) Int. Cl.: F16N 21/04

(54) **KUPPLUNGSEINRICHTUNG ZUM VERBINDEN MIT EINEM SCHMIERNIPPEL**
COUPLING DEVICE FOR CONNECTING WITH A LUBRICATING NIPPLE
DISPOSITIF DE COUPLAGE A RELIER A UN MAMELON DE GRAISSAGE

(43) Veröffentlichungstag der Anmeldung: 14.03.2018
(73) Patentinhaber: MATO GmbH & Co. KG, 63165 Mühlheim am Main (DE)
(72) Erfinder: Simon, Steffen, 63594 Hasselroth (DE)
(74) Vertreter: Quermann, Helmut

(56) Entgegenhaltungen:
- US-A- 2 070 013
- US-B2- 8 955 544

## Beschreibung

Die Erfindung betrifft eine Kupplungseinrichtung zum Verbinden mit einem Schmiernippel im Bereich eines Schmiernippelkopfes.

Kupplungseinrichtungen sind beispielsweise Bestandteil einer Handhebelpresse gemäß DIN 1283, bei der von der eigentlichen, manuell betätigten Presse über eine Hochdruck-Schlauchleitung ein Fluid, bei dem es sich insbesondere um Schmierfett handelt, der Kupplungseinrichtung zugeführt wird. Eine solche Handhebelpresse, mittels derer Maschinen und Geräte abgeschmiert werden können, ist Gegenstand der DIN 1283, Ausgabe November 1990.

Schmiernippel sind in den unterschiedlichsten Gestaltungen bekannt, beispielsweise als Kegelschmiernippel nach DIN 71412, Kugelschmiernippel nach DIN 3402, Trichterschmiernippel nach DIN 3405 und Flachschmiernippel nach DIN 3404. Besondere Bedeutung besitzen hierbei Kegelschmiernippel nach der DIN 71412, Ausgabe November 1987. Bei diesen ist der Schmiernippelkopf als Kegelkopf ausgebildet. Er weist auf dem einen, einem Einschraubgewinde des Schmiernippels abgewandten Ende einen Kegelstumpfabschnitt auf, der sich zum freien Ende des Schmiernippels verjüngt. Zum Einschraubgewinde hin schließt sich an den Kegelstumpfabschnitt ein Zwischenabschnitt an, der eine nach außen gerichtete Krümmung besitzt. Dieser Zwischenabschnitt verjüngt sich zum Einschraubgewinde hin.

Im Bereich der SAE-Normung werden derartige Schmiernippel unter der Bezeichnung SAE J 534 geführt.

Die Schmiernippel, insbesondere Kegelschmiernippel eignen sich zum Abschmieren mittels manuell betätigbarer Schmierpressen, wie auch mit mittels externer Kraft betätigbarer Schmierpressen. Die Verbindung des Schmiernippels mit der Kupplungseinrichtung ist formschlüssig. Hierdurch sind auch Abschmiervorgänge bei Schräglage der Kupplungseinrichtung an schwer zugänglichen Schmierstellen möglich.

Aus der US 8,955,544 B2 ist eine Kupplungseinrichtung zum Verbinden mit einem Schmiernippel im Bereich eines Schmiermittelkopfes bekannt. Die Kupplungseinrichtung weist einen Grundkörper auf, der eine Einlassöffnung und eine Auslassöffnung sowie einen die Einlassöffnung und die Auslassöffnung verbindenden Durchgang aufweist. Ferner besitzt diese Kupplungseinrichtung, bezogen auf den Durchgang, außen in dem Grundkörper schwenkbar gelagerte Kupplungsbacken, die um den Durchgang herum angeordnet sind. Diese Kupplungsbacken stehen über die Auslassöffnung vor und sind in einer ersten Stellung eingeschwenkt, zum Hintergreifen des Schmiernippelkopfs, sowie in einer zweiten Stellung ausgeschwenkt, zum Freigeben des Schmiernippelkopfs. In dem Grundkörper ist eine Schiebehülse verschieblich gelagert. Die Schiebehülse ist entgegen einer Federkraft mittels eines manuell verstellbaren, im Grundkörper und der Schiebehülse gelagerten Stellmittels von einer ersten Stellung, in der es die Klemmbacken in der ersten Stellung festlegt, in eine zweite Stellung, in der es die in der ersten Stellung befindlichen Klemmbacken freigibt, überführbar. Die Federkraft wird mittels einer Schraubendruckfeder aufgebracht, die sich an einem Absatz des Grundkörpers und an der Schiebehülse unmittelbar abstützt und den Grundkörper umgibt.

Bei dieser Kupplungseinrichtung wird zu deren Verbinden mit dem Schmiernippel die Kupplungseinrichtung manuell ergriffen und manuell ein im Grundkörper und in der Schiebehülse gelagerter Schwenkhebel verschwenkt, wobei über den Schwenkhebel die Schiebehülse in Richtung der Einlassöffnung des Grundkörpers verschoben wird, und damit die Schiebehülse aufgrund einer sich von der Auslassöffnung des Grundkörpers weg konisch erweiternden Innenkontur der Schiebehülse einen Raum zum Verschwenken der Klemmbacken in deren zweite Stellung freigibt, sodass ein Kegelschmiernippel beim Einsetzen in die Kupplungseinrichtung die Klemmbacken nach außen drücken kann, in deren zweiten Stellung. Nach dem Loslassen des Schwenkhebels wird dieser unter Einwirkung der Federkraft wieder zurückgeschwenkt und hierbei die Schiebehülse bei Zusammenwirken der konischen Flächen von Schiebehülse und Klemmbacken wieder von der Einlassöffnung des Grundkörpers weg verschoben, sodass die Klemmbacken wieder in deren erste Stellung verschwenkt werden, in der sie dann den Schmiernippelkopf des Kegelschmiernippels mit radial nach innen gerichteten Ansätzen der Klemmbacken hintergreifen. - Diese Gestaltung mit den konischen zusammenwirkenden Flächen bewirkt eine ungünstige Kraftkomponente in Schieberichtung der Schiebehülse und entgegengesetzt, die jeweils von dem Schwenkhebel oder der Feder zum Beaufschlagen der Schiebehülse aufgebracht werden muss. Dies ist besonders nachteilig dann, wenn die Kupplungseinrichtung unter hohem Druck steht und unter diesem hohen Druck die Kupplungseinrichtung in deren geöffnete Stellung zu überführen ist, in der sie vom Schmiernippel getrennt wird. Hierbei ist es überdies von Nachteil, dass durch das Zurückziehen der Schiebehülse, somit das Bewegen der Schiebehülse in Richtung der Einlassöffnung des Grundkörpers zum Trennen der Verbindung mit dem Schmiernippel Fluid, insbesondere Fett, unter hohem Druck in diesem dem Schmiernippel zugewandten Bereich der Kupplungseinrichtung aus dieser ungeschützt heraustreten kann.

Aus der US 2,070,013 A ist eine Kupplungseinrichtung zum Verbinden mit einem Schmiernippel im Bereich eines Schmiernippelkopfes bekannt. Die Kupplungseinrichtung weist einen Grundkörper, der eine Einlassöffnung und eine Auslassöffnung sowie einen die Einlassöffnung und die Auslassöffnung verbindenden Durchgang aufweist, ferner, bezogen auf den Durchgang, außen in dem Grundkörper schwenkbar gelagerte Klemmbacken auf. Die Klemmbacken sind in einer ersten Stellung eingeschwenkt, zum Hintergreifen des Schmiernippelkopfs, sowie in einer zweiten Stellung ausgeschwenkt, zum Freigeben des Schmiernippelkopfs. Ferner ist dem Grundkörper eine Schiebehülse entgegen einer Federkraft verschieblich gelagert, von einer ersten Stellung, in der die Schiebehülse die Klemmbacken in deren ersten Stellung festlegt, in eine zweite Stellung, in der die Schiebehülse die in der ersten Stellung befindlichen Klemmbacken freigibt. Die Klemmbacken sind nicht um den Durchgang herum angeordnet, sondern es werden die Klemmbacken von axial verlaufenden Nuten des Grundkörpers aufgenommen, so dass zwischen zwei benachbarten Klemmbacken ein radial vorstehender Bereich des Grundkörpers verbleibt. Das Federmittel, das als Schraubendruckfeder ausgebildet ist, wirkt im Bereich eines Endes auf einen Ansatz der Schiebehülse und im Bereich des anderen Endes sowohl auf die Klemmbacken als auch auf den Grundkörper. Ein axiales Verschieben der Klemmbacken bezüglich des Grundkörpers verhindert ein Drahtring, der in radial äußere Nuten der Klemmbacken und des Grundkörpers eingesetzt ist. Die Klemmbacken schließen im Bereich ihres dem Schmiernippel zugewandten Endes mit der Auslassöffnung des Grundkörpers ab.

Eine Kupplungseinrichtung zum Verbinden mit einem Kegelschmiernippel ist ferner aus der DE 28 05 829 A1 und der DE 295 09 667 U1 bekannt.

Aufgabe der vorliegenden Erfindung ist es, die Kupplungseinrichtung gemäß der US 8,955,544 B2, somit eine Kupplungseinrichtung, die die Merkmale des Oberbegriffs des Patentanspruchs 1 aufweist, so weiterzubilden, dass das Kuppeln mit dem Schmiernippel einfach erfolgen kann, die gekuppelte Verbindung auch bei sehr hohen Drücken des Fluids gewährleistet ist und auch unter den sehr hohen anstehenden Drücken ein sicheres und einfaches Entkuppeln der Kupplungseinrichtung möglich ist.

Gelöst wird die Aufgabe durch eine Kupplungseinrichtung, die gemäß den Merkmalen des Patentanspruchs 1 ausgebildet ist.

Bei der erfindungsgemäßen Kupplungseinrichtung ist vorgesehen, dass die Schiebehülse einen inneren Kontaktabschnitt aufweist, der parallel zur Bewegungsrichtung der Schiebehülse bei deren Verschieben angeordnet ist. Der innere Kontaktabschnitt liegt in der ersten Stellung der Klemmbacken an parallel zum inneren Kontaktabschnitt positionierten Gegenkontaktabschnitten der Klemmbacken an.

Wegen der Anordnung des inneren Kontaktabschnitts der Schiebehülse und der Gegenkontaktabschnitte der Klemmbacken können somit bei in der ersten Stellung befindlichen Klemmbacken, in der die Klemmbacken somit den Schmiernippelkopf hintergreifen, keine axialen Kräfte über die Klemmbacken auf die Schiebehülse übertragen werden. Solche Kräfte mit axialer Komponente würden ohne entgegenwirkende hohe Federkraft ein Verschieben der Schiebehülse relativ zum Grundkörper bedingen. Ein Verschieben der Schiebehülse erfolgt somit unter Einwirkung des verstellbaren Stellmittels, bei dem es sich insbesondere um ein manuell verstellbares Stellmittel handelt, bzw. entgegengesetzt zu diesem durch die Einwirkung der Federkraft. Aufgrund der Anordnung von Kontaktabschnitt und Gegenkontaktabschnitten lassen sich mit der Kupplungseinrichtung im jeweiligen Betriebszustand sehr hohe Druckkräfte beherrschen. Die besondere Bewegungsrichtung der Schiebehülse dahingehend, dass sie beim Bewegen in deren zweite Stellung von der Einlassöffnung des Grundkörpers weg bewegt wird, somit auf den in die Kupplungseinrichtung einzusetzenden bzw. eingesetzten Schmiernippel hin bewegt wird, führt beim Entkoppeln des Schmiernippels, somit Entkoppeln des unter hohem Druck stehenden Systems dazu, dass die Schiebehülse den Kontaktbereich von Schmiernippel und Kupplungseinrichtung radial außen umschließt und damit Fluid, insbesondere Fett nicht nach außen spritzen kann. Beim Bewegen der Schiebehülse in deren zweite Stellung gelangen der innere Kontaktabschnitt und die Gegenkontaktabschnitte außer Kontakt, sodass die Klemmbacken dann in deren zweite Stellung schwenkbar sind.

Die Kupplungseinrichtung findet insbesondere bei einem Kegelschmiernippel gemäß der vorstehend angesprochenen DIN 71412 bzw. SAE J-534 Verwendung. Insbesondere ist die Kupplungseinrichtung Bestandteil einer Handhebelpresse, gemäß DIN 1283 oder einer in sonstiger Art und Weise kraftbetätigten Schmierpresse, und hierbei mit einer Druckleitung, insbesondere einem Druckschlauch der Schmierpresse verbunden.

Gemäß der Erfindung ist ein Federmittel vorgesehen, das die Klemmbacken in deren erste Stellung vorspannt. Beim Einsetzen des Schmiernippelkopfes in die Kupplungseinrichtung werden die Klemmbacken in deren zweite Stellung überführt. Der Schmiernippelkopf, insbesondere bei Ausbildung des Schmiernippels als Kegelschmiernippel dessen in Einführrichtung vorlaufender
Kegelstumpfabschnitt, kontaktiert die Klemmbacken und spreizt diese, entgegen der Wirkung der Federmittel nach außen in deren zweite Stellung.

Unter diesem Aspekt ist die erfindungsgemäße Kupplungseinrichtung derart gestaltet, dass zwischen dem Grundkörper und der Schiebehülse eine Vorspannhülse angeordnet ist, die in der Bewegungsrichtung der Schiebehülse verschieblich ist. Hierbei wirkt die Vorspannhülse auf die Klemmbacken ein und spannt diese in deren erste Stellung vor. Das Federmittel ist zwischen der Schiebehülse und der Vorspannhülse wirksam. Das Federmittel ist vorzugsweise als Schraubendruckfeder ausgebildet. Diese kann somit baulich kompakt gestaltet und in einem Ringraum zwischen der Schiebehülse und dem Hohlkörper angeordnet werden.

Die schwenkbare Lagerung der Klemmbacken erfolgt baulich besonders einfach und funktional, indem die Klemmbacken im Bereich von der Einlassöffnung des Grundkörpers zugewandten Enden in einer Außennut des Grundkörpers, in Bewegungsrichtung der Schiebehülse festgelegt, schwenkbar gelagert sind.

Die Vorspannhülse wirkt in einem ein Schwenkmoment erzeugenden Abstand zur Schwenkachse des jeweiligen Klemmbackens auf diesen ein. Durch diesen Abstand ist ein Hebelarm definiert, über den die federvorgespannte Vorspannhülse eine Kraft in den jeweiligen Klemmbacken einleitet und diesen somit in Richtung der ersten Stellung des Klemmbackens beaufschlagt.

Die Klemmhülse weist vorzugsweise innen einen umlaufenden Freiraum zur Aufnahme der Klemmbacken in deren zweiten Stellung auf. Beim Verschieben der Schiebehülse in deren zweite Stellung, in der die Schiebehülse somit die sich in der ersten Stellung befindlichen Klemmbacken freigibt, sind die Klemmbacken in einem Bereich benachbart des umlaufenden Freiraums positioniert, sodass die Klemmbacken bei der Relativverschiebung zum Schmiernippelkopf nach radial außen schwenken können. Insbesondere ist der Freiraum derart gestaltet, dass eine Schwenkung der Klemmbacken über die zweite Stellung hinaus begrenzt ist, somit nur bis zum Erreichen der zweiten Stellung möglich ist.

Es sind insbesondere identisch gestaltete Klemmbacken vorgesehen. Vorzugsweise sind vier Klemmbacken vorgesehen, die sich jeweils über einen Winkel von 90° erstrecken.

Die Klemmbacken sind insbesondere derart gestaltet, dass sie im Bereich von der Einlassöffnung des Grundkörpers abgewandten Enden einen nach radial innen gerichteten Ansatz zum Hintergreifen des Schmiernippelkopfs in der ersten Stellung der Klemmbacken aufweisen.

Gemäß einer Weiterbildung ist vorgesehen, dass die nach innen gerichteten Enden der Klemmbacken in der ersten und zweiten Stellung der Klemmbacken vollständig innerhalb der Schiebehülse angeordnet sind. Demzufolge ist ein wirksamer Schutz gegen nach radial außen austretendes Schmiermittel beim Trennen von Schmiernippel und Kupplungseinrichtung gewährleistet. Dies gilt erst recht dann, wenn gegen Ende des Trennvorgangs, somit wenn sich die Schiebehülse in deren zweiten Endstellung befindet, in der sie maximal weit von der Einlassöffnung des Grundkörpers weg bewegt ist, die Schiebehülse noch weiter über die Trennstelle von Schmiernippel und Kupplungseinrichtung vorgeschoben ist.

Dieser Effekt wird noch weiter verbessert, wenn die Schiebehülse im Bereich dessen der Einlassöffnung des Grundkörpers abgewandten Endes einen nach radial innen gerichteten, insbesondere umlaufenden Ansatz aufweist, der die Klemmbacken im Bereich von der Einlassöffnung des Grundkörpers abgewandten Stirnflächen hintergreift, insbesondere in den ersten Stellungen von Schiebehülse und Klemmbacken an diesen Stirnflächen anliegt. Durch die nach innen gerichteten, umlaufenden Ansätze der Schiebehülse wird ein Ringspalt zum Schmiernippel hin deutlich minimiert und damit auch der Durchtrittsquerschnitt, durch den Schmiermittel beim Trennen von Schmiernippel und Kupplungseinrichtung treten könnte.

Unter dem Aspekt einer optimalen Abdichtung innerhalb der Kupplungseinrichtung und im Verbindungsbereich der Kupplungseinrichtung mit dem Schmiernippel wird es als besonders vorteilhaft angesehen, wenn der Grundkörper im Bereich des Durchgangs eine im Grundkörper und/oder einer Zwischenhülse verschieblich gelagerte elastische Dichtungshülse aufnimmt, die unter Einwirkung einer Federkraft in Richtung der Ausgangsöffnung des Grundkörpers gegen einen grundkörperseitigen Anschlag vorgespannt ist. Diese elastische Dichtungshülse dichtet zum Grundkörper und/oder zum Schmiernippelkopf ab, konkret zu dessen Stirnseite hin, wobei beim Einsetzen des Schmiernippels in die Kupplungseinrichtung der Schmiernippelkopf die elastische Dichtungshülse geringfügig entgegen der Federkraft verschiebt. Hierdurch liegt die Dichtungshülse unter Federkraft am Schmiernippelkopf an, in einem Zustand, in dem die Klemmbacken den Schmiernippelkopf hintergreifen und somit definiert axial bezüglich der Kupplungseinrichtung positionieren.

Vorzugsweise wird die auf die Dichtungshülse ausgeübte Federkraft durch eine Schraubendruckfeder erzeugt. Diese ist insbesondere zwischen der Dichtungshülse und dem Grundkörper wirksam. Sie stützt sich insbesondere am Dichtungskörper und einer Ventilkugel ab. Diese Kugel sperrt in der Schließstellung einen der Einlassöffnung des Grundkörpers zugeordneten Abschnitt des Durchgangs. Dieser Abschnitt besitzt einen wesentlich geringeren Durchmesser als der sich unmittelbar an die Kugel in Richtung der Auslassöffnung anschließende Bereich des Durchgangs.

Die Zwischenhülse ist vorzugsweise zwischen der Dichtungshülse und dem Grundkörper angeordnet. Die Zwischenhülse weist hierbei außen in deren Längsrichtung verlaufende Führungen für Wälzelemente, insbesondere für Kugeln auf. Diese Wälzelemente sind in Schieberichtung der Zwischenhülse und nach radial außen festgelegt. Insbesondere erfolgt die Festlegung nach radial außen mittels der Vorspannhülse. Durch diese Anordnung der Wälzelemente in den Führungen kann die Zwischenhülse und damit die Dichtungshülse beim Kuppeln des Schmiernippels mit der Kupplungseinrichtung bzw. dem Entkuppeln dieser Teile geringfügig axial sich bewegen und beeinflusst damit den Kupplungs- bzw. Entkupplungsvorgang, in dem währenddessen der Schmiernippelkopf dauerhaft bei Verschiebung der Dichtungshülse an dieser anliegt. Der Verschiebeweg der Dichtungshülse ist durch den möglichen Verschiebeweg der Zwischenhülse aufgrund des Zusammenwirkens der Wälzelemente mit den Führungen gegeben.

Das manuell verstellbare Stellmittel zum Verschieben der Schiebehülse ist insbesondere als Schwenkhebel ausgebildet. Dieser Schwenkhebel ist schwenkbar im Grundkörper und, in Abstand zur Schwenkachse im Grundkörper, schwenkbar in der Schiebehülse gelagert. Ergriffen wird die Kupplungseinrichtung mit einer Hand, wobei insbesondere vier Finger der Hand den Grundkörper im Bereich des Schwenkhebels umfassen und der fünfte Finger, insbesondere der Daumen der Hand, auf den Schwenkhebel einwirkt und hierbei gegen den Grundkörper drückt bzw. loslässt, sodass in letztgenanntem Fall der Schwenkhebel unter Einwirkung der auf die Schiebehülse wirkenden Feder wieder zurückgeschwenkt wird.

Der Grundkörper ist vorzugsweise derart ausgebildet, dass er im Bereich der Einlassöffnung einen Gewindeabschnitt zur Verschrauben mit einem fettpressenseitigen Kupplungselement aufweist. Insbesondere ist hierbei ein Kupplungsteil vorgesehen, das zwei zueinander drehbare Teilabschnitte aufweist. Somit kann ein mit dem einen, freien drehbaren Teilabschnitt verbundener Kupplungsschlauch bzw. verbundene Kupplungsleitung beliebig zusammen mit diesem Teilabschnitt verdreht werden, aufgrund der zueinander drehbaren Anordnung der beiden Teilabschnitte.

Vorzugsweise ist die Schiebehülse, ausgehend von deren der Einlassöffnung des Grundkörpers abgewandten Seite bis über eine Länge von mehr als 20 mm, insbesondere bis zu 60 mm, mit einem konstanten Außendurchmesser versehen, der maximal 15 mm aufweist. Ein solcher Außendurchmesser von 15 mm erlaubt es, die Kupplungseinrichtung auch mit solchen Schmiernippeln zu verbinden, die nicht unmittelbar frei zugänglich sind, sondern geschützt in einer genormten Lochvertiefung angeordnet sind, die nur geringfügig größer im Durchmesser ist als 15 mm.

Mit der erfindungsgemäßen Kupplungseinrichtung einschließlich deren Weiterbildungen lassen sich Drücke des Schmiermittels von über 400 bar bis zu 1 000 bar beherrschen. Auch bei diesen hohen Drücken ist ein sicheres dauerhaftes Kuppeln von Kupplungseinrichtung und Schmiernippel, vorzugsweise Kegelschmiernippel, dauerhaft gewährleistet, insbesondere aufgrund des parallel der Bewegungsrichtung der Schiebehülse angeordneten Kontaktabschnitts der Schiebehülse und der hierzu parallel positionierten Gegenkontaktabschnitten der Klemmbacken in deren ersten Stellung. Dies ermöglicht es auch, die Verbindung von Kupplungseinrichtung und Schmiernippel einfach zu lösen. Der Anbindungspunkt der Klemmbacken am Grundkörper ist so gewählt, dass die Federmittel die Federbacken in deren erste Stellung vorspannen. Der federbelastete Dichtungskörper gewährleistet eine besonders hohe Dichtigkeit im Verbindungsbereich von Schmiernippelkopf und Kupplungseinrichtung. Der Durchgang durch den Dichtungskörper, somit der Durchmesser der den Dichtungskörper durchsetzenden Bohrung ist auf die Durchgangsbohrung im Schmiernippelkopf und damit dem Schmiernippel abgestimmt.

Somit ist mittels der Kupplungseinrichtung ein Öffnen unter Druck, demnach ein schlagartiges Öffnen bei Drücken über 400 bar bei Minderung des Druckstoßes ohne weiteres möglich. Die vorne, somit im Kupplungsbereich zum Schmiernippel weitgehend geschlossene Konstruktion verhindert ein Spritzen von Schmiermittel.

Weitere Merkmale der Erfindung sind in den Unteransprüchen, der Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand eines bevorzugten Ausführungsbeispiels dargestellt, ohne auf dieses beschränkt zu sein.

Es zeigt:

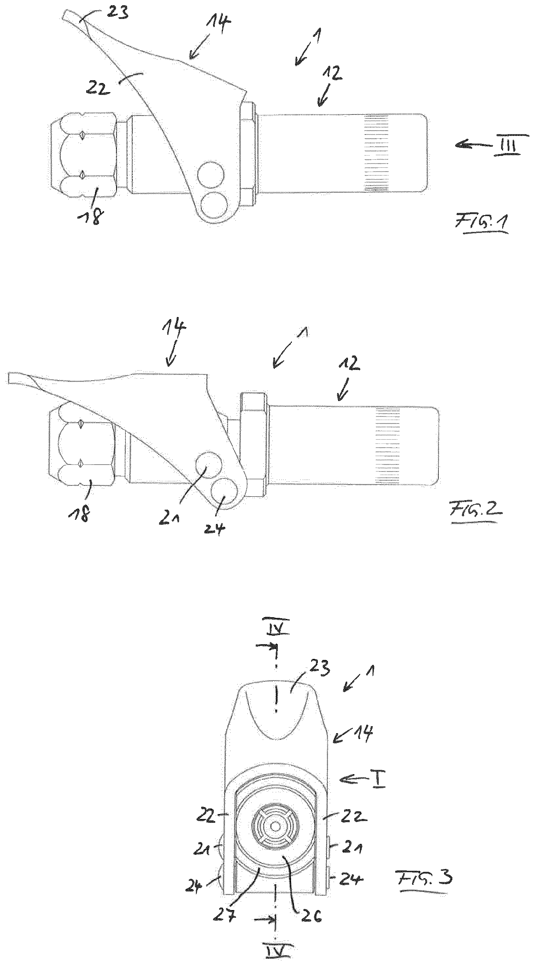

- Fig. 1: eine Seitenansicht der Kupplungseinrichtung (gemäß Ansicht I in Fig. 3), in nicht manuell betätigtem Zustand,
- Fig. 2: die Kupplungseinrichtung in der Seitenansicht gemäß Fig. 1, bei manuell betätigtem Zustand,
- Fig. 3: die Kupplungseinrichtung in einer Ansicht III in Fig. 1,
- Fig. 4: einen Schnitt durch die Kupplungseinrichtung gemäß Fig. 1, somit bei nicht manuell betätigtem Zustand, gemäß der Schnittlinie IV-IV in Fig. 3,
- Fig. 5: einen Schnitt V-V gemäß Fig. 4,
- Fig. 6: einen Schnitt VI-VI gemäß Fig. 4,
- Fig. 7: die Kupplungseinrichtung in einer Schnittdarstellung gemäß Fig. 4 für den Zustand nach Fig. 2, somit in manuell betätigtem Zustand,
- Fig. 8: die Kupplungseinrichtung in einer Schnittdarstellung gemäß Fig. 7, veranschaulicht für einen mit einem Schmiernippelkopf teilweise in die Kupplungseinrichtung eingeführten Schmiernippel,
- Fig. 9: die Kupplungseinrichtung in der Schnittdarstellung gemäß Fig. 8 für den vollständig in diese eingeführten Schmiernippelkopf, bei manuell betätigtem Zustand der Kupplungseinrichtung,
- Fig. 10: die Anordnung gemäß Fig. 9, bei nicht manuell betätigtem Zustand, somit mit der Kupplungseinrichtung gekuppeltem Schmiernippel,
- Fig. 11: der schmiernippelseitige Bereich der Kupplungseinrichtung in einer vergrößerten Darstellung, mit gekuppeltem Schmiernippel, veranschaulicht für den Zustand gemäß Fig. 10.

### Figurenbeschreibung

Die Kupplungseinrichtung 1 dient dem Verbinden mit einem Schmiernippel 2 im Bereich eines Schmiernippelkopfs 3. Bei diesem Schmiernippel handelt es sich insbesondere um ein Kegelschmiernippel gemäß DIN 71 412, Ausgabe November 1987. Die Kegelschmiernippel können in unterschiedlichen Formen, Form A, Form B, Form C ausgebildet sein. Der Schmiernippel weist den Schmiernippelkopf 3 auf, der, einem Gewindeabschnitt 4 des Schmiernippels 2 abgewandt, einen Kegelstumpfabschnitt 5 aufweist, an den sich, zum Gewindeabschnitt 4 hin, ein nach außen gewölbter Zwischenabschnitt 6 anschließt, der einen Teilbereich einer Kugel darstellt. Dieser Schmiernippel 2 muss nicht über ein Bauteil, das eingeschraubt ist, überstehen, sondern es kann dieses Bauteil ein Sackloch aufweisen, im Bereich dessen der Schmiernippel 2 eingeschraubt ist. Dieses Sackloch weist beispielsweise einen Durchmesser auf, der geringfügig größer als 15 mm ist.

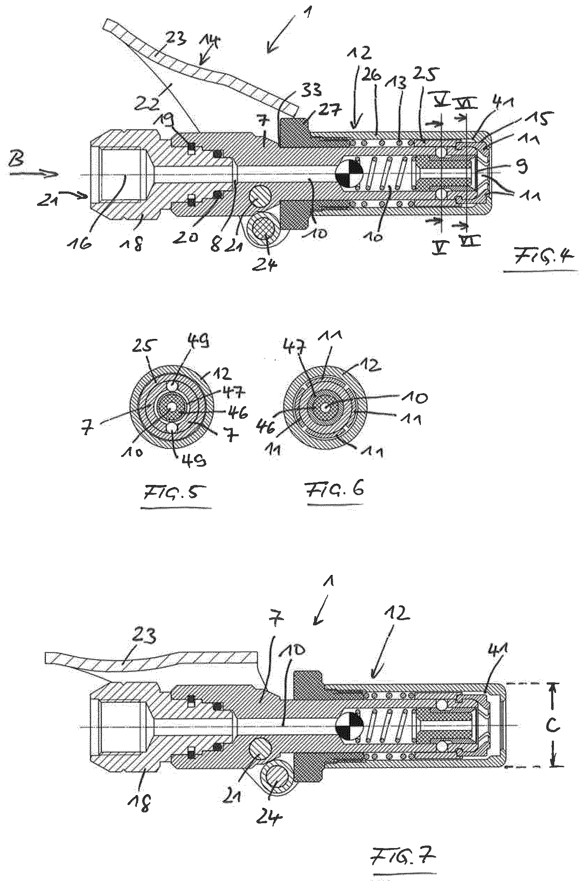

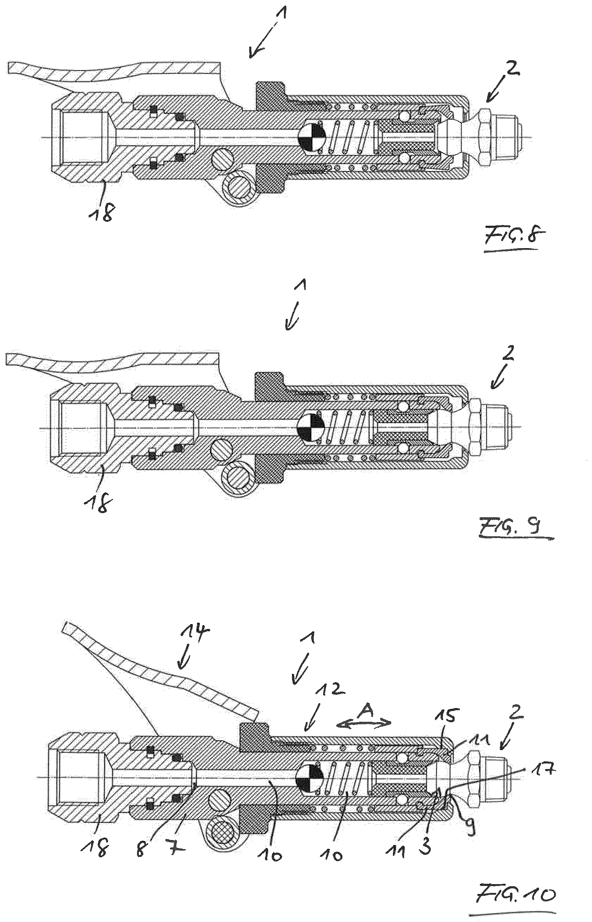

Die Kupplungseinrichtung 1 weist einen Grundkörper 7 auf. Dieser weist eine Einlassöffnung 8 und eine Auslassöffnung 9 sowie einen die Einlassöffnung 8 und die Auslassöffnung 9 verbindenden Durchgang 10 auf. Ferner weist die Kupplungseinrichtung 1, bezogen auf den Durchgang 10, außen in dem Grundkörper 7 schwenkbar gelagerte Kupplungsbacken 11, konkret vier identische Kupplungsbacken 11 auf, die um den Durchgang 10 herum angeordnet sind. Die Kupplungsbacken 11 stehen über die Auslassöffnung 9 hervor und sind in einer ersten Stellung, wie es in den Fig. 4, 6, 7, 9, 10 und 11 veranschaulicht ist, eingeschwenkt und in einer zweiten Stellung, wie es in der Fig. 8 veranschaulicht ist, ausgeschwenkt. In der ersten Stellung der Kupplungsbacken 11 hintergreifen diese, sofern ein Schmiernippel 2 in die Kupplungseinrichtung 1 eingesteckt ist, den Schmiernippelkopf 3 im Bereich dessen Zwischenabschnitt 6, wie es in den Fig. 9 bis 11 veranschaulicht ist. In der zweiten Stellung der Kupplungsbacken 11 geben diese den Schmiernippelkopf 3 frei, wie es in Fig. 8 veranschaulicht ist.

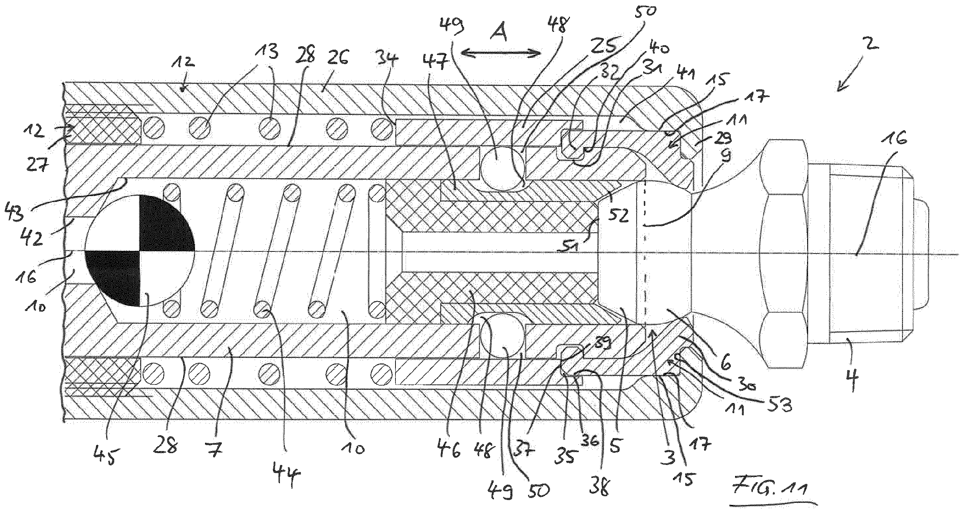

Die Kupplungseinrichtung 1 weist ferner eine in dem Grundkörper 7 verschieblich gelagerte Schiebehülse 12 auf. Diese ist entgegen einer Federkraft, die durch eine Schraubendruckfeder 13 aufgebracht wird, mittels eines manuell verstellbaren, im Grundkörper 7 und in der Schiebehülse 12 schwenkbar gelagerten Stellmittels 14 verschiebbar, von einer ersten Stellung der Schiebehülse 12, wie sie in den Fig. 4 und 10 veranschaulicht ist, in der die Schiebehülse 12 die Klemmbacken 11 in deren ersten Stellung festlegt, in eine zweite Stellung der Schiebehülse 12, veranschaulicht in den Fig. 7 bis 9, in der die Schiebehülse 12 die in der ersten Stellung befindlichen Klemmbacken 11 freigibt. Hierbei weist die Schiebehülse 12 einen inneren Kontaktabschnitt 15 auf, der in der Bewegungsrichtung gemäß Doppelpfeil A in Fig. 11 der Schiebehülse 12 bei deren Verschieben angeordnet ist, somit parallel zu einer Längsmittelachse 16 der Kupplungseinrichtung 1. Der innere Kontaktabschnitt 15 liegt in der ersten Stellung der Klemmbacken 11 an parallel zum inneren Kontaktabschnitt 15 positionierten Gegenkontaktabschnitten 17 der Klemmbacken 11 an. Die Schiebehülse 12 wird beim Bewegen in deren zweiten Stellung von der Einlassöffnung 8 des Grundkörpers 7 weg bewegt. Hierbei gelangen der innere Kontaktabschnitt 15 und die Gegenkontaktabschnitten 17 außer Kontakt.

Der Grundkörper ist im Wesentlichen bezüglich dessen Längsmittelachse 16 rotationssymmetrisch ausgebildet. Sein die Einlassöffnung 8 aufweisendes Ende ist mit einer Aufnahme für einen Drehanschluss 18 ausgebildet. Dieser ist über einen Sicherungsring 19 axial bezüglich des Grundkörpers 7 festgelegt und über einen Dichtring 20 zum Grundkörper 7 hin abgedichtet. Somit kann der Drehanschluss 18 beliebig bezüglich des Grundkörpers 7 um dessen Längsmittelachse 16 gedreht werden. Der Drehanschluss 18 weist im Bereich seines dem Grundkörper 7 abgewandten Endes einen Gewindeanschluss 21 zum festen Verschrauben mit einem komplementären Anschlussteil einer Druckleitung auf, die mit einer Schmierpresse zum Ausgeben von Schmiermittel verbunden ist. Schmiermittel wird somit mittels der Schmierpresse in Richtung des Pfeils B vom Drehanschluss 18 durch die Kupplungseinrichtung 1 zum Schmiernippel 2 gefördert.

Den Grundkörper 7 durchsetzt in dessen dem Drehanschluss 18 zugewandten Endbereich eine Lagerachse 21, in der das als Handhebel ausgebildete Stellmittel 14 gelagert ist. Hierbei weist der Handhebel zwei Seitenflanken 22, ferner einen diese verbindenden Steg 23 auf der der Lagerachse 21 abgewandten Seite des Grundkörpers 7 auf. In den dem Steg 23 abgewandten Enden der beiden Seitenflanken 22 ist eine weitere Lagerachse 24 gelagert, die parallel zur Lagerachse 21 in der Schiebehülse 12 gelagert ist. Wird die Kupplungseinrichtung 1 im Bereich des Steges 23 und auf der dem Steg 23 abgewandten Seite des Grundkörpers 7 ergriffen und so betätigt, dass der Steg 23 in Richtung des Grundkörpers 7 geschwenkt wird, führt dies dazu, dass die Schiebehülse 12 von der Einlassöffnung 8 in Richtung des Pfeils B verschoben wird und damit der inneren Kontaktabschnitt 15 der Schiebehülse 12 außer Kontakt mit den Gegenkontaktabschnitten 17 der Klemmbacken 11 gelangt. Hierbei wird die Schraubendruckfeder 13, die in Richtung der Längsmittelachse 16 wirksam ist, zwischen der Schiebehülse 12 und einer Vorspannhülse 25 gespannt. Diese ständig unter Vorspannung stehende Vorspannhülse 25 wirkt auf die Klemmbacken 11 ein. Im Detail ist die Schiebehülse 12 zweiteilig ausgebildet und besteht aus einem vorderen hülsenförmigen Schiebeteil 26 und einem hinteren, in das Schiebeteil 26 eingeschraubten Schiebeteil 27. Beide Schiebeteile 26, 27 sind rotationssymmetrisch ausgebildet. Das Schiebeteil 27 ist radial innen in einem äußeren zylindrischen Mantelabschnitt 28 des Grundkörpers 7 geführt.

Das Schiebeteil 26 weist im Bereich dessen der Einlassöffnung 8 des Grundkörpers 7 abgewandten Endes, somit im Bereich dessen vorderen Endes, einen nach radial innen gerichteten umlaufenden Ansatz 29 auf. Dieser hintergreift die Klemmbacken 11 im Bereich von der Einlassöffnung 8 abgewandten Stirnflächen 53 und liegt an diesen in der ersten Stellung der Klemmbacken 11 an.

Die Klemmbacken 11 weisen im Bereich von der Einlassöffnung 8 abgewandten Enden einen nach radial innen gerichteten Ansatz 30 zum Hintergreifen des Schmiernippelkopfs 3 im Bereich des Zwischenabschnitts 6 in der ersten Stellung der Klemmbacken 11 auf. Diese nach innen gerichteten Ansätze 29 der Klemmbacken 11 sind in der ersten Stellung der Klemmbacken 11 innerhalb der Schiebehülse 12 und somit innerhalb des Schiebeteils 26 angeordnet. Die Klemmbacken 11 sind im Bereich von der Einlassöffnung 8 des Grundkörpers 7 zugewandten Enden in einer Außennut 31 des Grundkörpers 7, konkret einer den Mantelabschnitt 28 durchsetzenden Außennut 31 schwenkbar gelagert und hierbei im Grundkörper 7 weitgehend in Bewegungsrichtung der Schiebehülse 12 festgelegt. Hierbei ist die Stärke der Außennut 31 etwas größer als die Abmessung eines Ansatzes 32 des jeweiligen Klemmbackens 11 in dieser Richtung, sodass der jeweilige Klemmbacken geringfügig in Richtung der Doppelpfeile A hin und her beweglich ist, womit ein Schwenken der Klemmbacken 11 möglich ist. In dieser in Fig. 11 gezeigten Stellung der Klemmbacken 11 liegt das Schiebeteil 27 der Schiebehülse 12 an einem die Bewegung der Schiebehülse 12 in Richtung der Einlassöffnung 8 begrenzenden Vorsprung 33 des Grundkörpers 7 an. Die rotationssymmetrisch ausgebildete Vorspannhülse 25 weist eine hintere Stirnfläche 34 auf, an der die Schraubendruckfeder 13 anliegt, ferner im vorderen Bereich eine umlaufende radial innere Aussparung 35 mit einem längs verlaufenden Abschnitt 36, der längs verlaufende Außenabschnitte 38 der Klemmbacken 11 hintergreift, und einen quer verlaufenden Abschnitt 37, der unter der Einwirkung der Kraft der Schraubendruckfeder 13 hintere Abschnitte 39 der Klemmbacken 11 kontaktiert. Die Tiefe der Außennut 31 und die Gestaltung von Außennut 31 und Ansatz 32 der Klemmbacken 11 bewirkt, dass der jeweilige Klemmbacken 11 im Bereich der umlaufenden Kante 40 des Grundkörpers um diese schwenkbar ist. Hingegen ist die Kraft, die über die federbelastete Vorspannhülse 25 auf den Ansatz 32 des jeweiligen Klemmbackens 11 einwirkt, in einem solchen Wirkabstand zur Kante 40 angeordnet, dass der jeweilige Klemmbacken 11 unter Einwirkung der Vorspannhülse 25 in Richtung der in Fig. 11 gezeigten ersten Stellung des Klemmbackens 11 vorgespannt ist, somit die Klemmbacken unter Einwirkung des durch die Vorspannhülse 25 ausgeübten Moments immer bestrebt sind, mit ihrem Ansatz 30 nach radial innen zu schwenken. Somit kann die Schiebehülse 12 frei nach vorne und hinten bewegt werden. Dies ist nur dann nicht der Fall, wenn beim Einsetzen des Schmiernippels 2 in die Kupplungseinrichtung 1 die Klemmbacken 11 mit deren dem Schmiernippelkopf 3 zugewandten Ende nach radial außen bewegt werden müssen. Damit diese Bewegung nach radial außen für die Klemmbacken 11 möglich ist, weist die Schiebehülse 12 innen einen umlaufenden Freiraum 41 zur Aufnahme der Klemmbacken 11 in deren zweiten Stellung auf. Dieser Freiraum 41 ist derart gestaltet, dass eine Schwenkung der Klemmbacken 11 über deren zweite Stellung nicht möglich ist.

Der Durchgang 10 durch den Grundkörper 7 weist zunächst, ausgehend von der Einlassöffnung 8 einen Durchgangsabschnitt 42 auf, dessen Durchmesser wesentlich geringer ist als ein sich bis zur Auslassöffnung 9 anschließender Durchgangsabschnitt 43 des Durchgangs 10. Auch dieser Durchgangsabschnitt 43 weist einen kreisförmigen Querschnitt auf, wobei die Achse die Längsmittelachse 16 ist. Der Durchgangsabschnitt 42 ist mittels eines Rückschlagventils verschließbar. Gezeigt ist eine mittels einer Schraubendruckfeder 44 beaufschlagte Kugel 45, die am Grundkörper 7 im Bereich des Durchgangsabschnitts 42 anliegt. Diese Schraubendruckfeder 44 stützt sich am anderen Ende an einer aus elastischem Material bestehenden Dichtungshülse 46 ab. Diese ist radial außen im Bereich ihres der Schraubendruckfeder 44 zugewandten Endes gegenüber dem Grundkörper 7 abgedichtet, allerdings bezüglich diesem in Richtung der Längsmittelachse 16 verschiebbar. In einem weiter vorne befindlichen Abschnitt der Dichtungshülse 46 nimmt diese radial außen eine aus Metall bestehende Zwischenhülse 47 auf, die radial außen eine umlaufende Nut 48 aufweist. Die Nut 48 nimmt zwei diametral zueinander angeordnete Kugeln 49 auf. Im Bereich der beiden Kugeln 49 ist der Grundkörper 7 mit zwei diesen durchsetzenden Löchern 50 versehen, in denen die Kugeln 49 im Wesentlichen in Axialrichtung und in Tangentialrichtung des Grundkörpers 7 spielfrei geführt sind. Die Nut 48 weist in Längsrichtung A eine Erstreckung auf, die größer ist als der Durchmesser der jeweiligen Kugel 49, und derart abgestimmt ist, dass die Zwischenhülse 47 und damit die Dichtungshülse 46 um ein definiertes Maß beim Einführen des Schmiernippels 2 entgegen der Kraft der Feder 44 verschiebbar sind. Im Bereich des der Einlassöffnung 8 abgewandten Endes weist die Dichtungshülse 46 eine ringförmige Stirnfläche 51 auf, die sich senkrecht zur Längsmittelachse 16 erstreckt und die Gegenkontaktfläche für die freie Stirnfläche des Kegelstumpfabschnitts 5 des Schmiernippelkopfs 3 bildet. Entsprechend der schrägen Kegelgeometrie des Kegelstumpfabschnitts 5 ist die Zwischenhülse 47 in ihrem dem Kegelstumpfabschnitt 5 zugewandten Bereich mit einer Schräge 52 versehen.

Somit wird eine besonders gute Abdichtung im Bereich der Dichtungshülse 46 und des Schmiernippelkopfs 3 erreicht. Die Dichtungshülse 46 ist über die Schraubendruckfeder 44 gegen den veränderlichen Anschlag vorgespannt, der sich aufgrund des Zusammenwirkens von Dichtungshülse 46, Zwischenhülse 47, Nut 48, Kugeln 49, Loch 50 und Grundkörper 7 ergibt.

Die Wirkungsweise der Kupplungseinrichtung 1 und deren Zusammenwirken mit dem Schmiernippel 2 ergibt sich wie folgt:
Fig. 4 zeigt die Kupplungseinrichtung 1 im Ausgangszustand, somit vor dem Verbinden mit einem Schmiernippel 2. Unter Einwirkung der Schraubendruckfeder 13 ist die Schiebehülse 12 nach hinten, somit in Richtung der Einlassöffnung 8 des Stellmittels 14 gegen den Vorsprung 33 bewegt. Die Klemmbacken 11 befinden sich in deren ersten Stellung und es können die Klemmbacken 11 nicht im Bereich deren Ansätze 30 nach radial außen schwenken, weil sie aufgrund der Anlage des inneren Kontaktabschnitts 15 der Schiebehülse 12 an den Gegenkontaktabschnitten 17 der Klemmbacken 11 hieran gehindert sind. Auch durch externes Einwirken, selbst mit hoher Kraft auf die Klemmbacken 11, kann keine Verschiebung der Schiebehülse 12 erfolgen, weil der innere Kontaktabschnitt 15 und die Gegenkontaktabschnitten 17 parallel zueinander und überdies parallel zur Längsmittelachse 16 angeordnet sind.

Ausgehend von dieser Stellung gemäß Fig. 4 wird, zum Verbinden mit dem Schmiernippel 2, das Stellmittel 14 in Richtung des Grundkörpers 7 verschwenkt. In dieser vollständig verschwenkten Stellung, wie sie in Fig. 7 gezeigt ist, ist aufgrund der kinematischen Anbindung von Grundkörper 7 und Schiebehülse 12 über das Stellmittel 14 die Schiebehülse 12 nach vorne, somit von der Einlassöffnung 8 des Grundkörpers 7 weg bewegt worden. Es ist der innere Kontaktabschnitt 15 der Schiebehülse 12 außer Kontakt mit den Gegenkontaktabschnitten 17 der Klemmbacken 11 gelangt, sodass die vorderen Enden der Klemmbacken 11 benachbart dem umlaufenden Freiraum 41 in der Schiebehülse 12 angeordnet sind. Unter Einwirkung der Schraubendruckfeder 13, die im Abstand zum Schwenkbereich der Klemmbacken 11 im Grundkörper 7 auf die Klemmbacken 11 einwirkt, verbleiben diese in der eingeschwenkten Position.

Wird, wie in Fig. 8 veranschaulicht, beim Aufstecken der Kupplungseinrichtung 1 auf den Schmiernippel 2, der Schmiernippel 2 mit dem Schmiernippelkopf 3 in die Kupplungseinrichtung 1 eingeführt, kontaktiert zunächst der Kegelstumpfabschnitt 5 des Schmiernippelkopfs 3 die Ansätze 30 der Klemmbacken 11 im Bereich deren radial inneren Enden und es werden, aufgrund der Konizität des Kegelstumpfabschnitts 5, beim weiteren Einschieben des Schmiernippelkopfs 3 die Klemmbacken 11 entgegen der Kraft der Schraubendruckfeder 13 nach außen geschwenkt und verschieben hierbei auch geringfügig die Vorspannhülse 25. Der Zustand, bei dem die Klemmbacken 11 in den Bereich des Zwischenabschnitts 6 des Schmiernippelkopfs 3 gelangt sind, ist in Fig. 8 gezeigt.

Beim weiteren Einschieben des Schmiernippels 2, somit des Schmiernippelkopfes 3 kontaktiert der Kegelstumpfabschnitt 5 die Dichtungshülse 46 im Bereich deren Stirnfläche 51 und verschiebt diese entgegen der Kraft der Schraubendruckfeder 44, die ihrerseits auf die Kugel 45 des Rückschlagventils einwirkt. Die Verschiebung der Dichtungshülse 46 ist aufgrund der Lagerung der Dichtungshülse 46 in der Zwischenhülse 47 und die Verschiebbarkeit der Zwischenhülse in dem Grundkörper 7 infolge des Zusammenwirkens der Nuten 48 und der Kugeln 49 möglich. Die Vorspannhülse 25 hat hierbei auch die Aufgabe, die Kugeln 49 in Richtung radial außen zu fixieren. Der vollständig in die Kupplungseinrichtung 1 eingesteckte Schmiernippel 2 ist in Fig. 9 veranschaulicht. In dieser Stellung können die Klemmbacken 11 unter Einwirkung der Schraubendruckfeder 13 wieder in deren Ausgangsstellung gemäß Fig. 4 zurückschwenken. Die Klemmbacken 11 kontaktieren den Schmiernippelkopf 3 im Bereich des Zwischenabschnitts 6, konkret in demjenigen Bereich des Zwischenabschnitts 6, der dem Kegelstumpfabschnitt 5 abgewandt ist, dort somit einen relativ geringen Durchmesser aufweist.

Ausgehend von diesem Zustand gemäß Fig. 9 wird die manuelle Beaufschlagung des Stellmittels 14 aufgehoben, sodass aufgrund der kinematischen Anbindung des Stellmittels 14 unter Einwirkung der Schraubendruckfeder 13 die Schiebehülse 12 wieder nach hinten gegen den Vorsprung 33 geschoben wird, und hierbei der inneren Kontaktabschnitt 15 der Schiebehülse 12 wieder in Wirkstellung mit den Gegenkontaktabschnitten 17 der Klemmbacken 11 gelangt, wie dies in Fig. 4 veranschaulicht ist.

Durch die Kupplungseinrichtung 1 und den Schmiernippel 2 kann nun Schmiermittel der zu schmierenden Einheit zugeführt werden. Hierbei herrscht ein üblicher Schmiermitteldruck von 20 bis 100 bar. Es können aber durchaus auch Schmiermitteldrücke über 400 bar anstehen. Aufgrund des Zusammenwirkens des inneren Kontaktabschnitts 15 der Schiebehülse 12 mit den Gegenkontaktabschnitten 17 der Klemmbacken 11 können über den Schmiermitteldruck keine Öffnungskräfte, die zu einem Bewegen der Schiebehülse 12 führen, in diese eingeleitet werden. Die Verbindung von Kupplungseinrichtung 1 und Schmiernippel 2 ist somit sicher und kann nur aufgehoben werden, wenn das Stellmittel 14, im Sinne einer Verschiebung der Schiebehülse 12 nach vorne, betätigt wird. Wird bei einem sehr hohen anstehenden Druck in der Kupplungseinrichtung 1 diese vom Schmiernippel 2 getrennt, bewirkt zunächst die sich nach vorne bewegende Schiebehülse 12, dass der Ausgangsbereich der Dichtungshülse 46 und die Klemmbacken 11 besonders gut abgedeckt werden und einen Spritzschutz bezüglich des Schmiermittels bieten. Ferner wird beim Entkuppeln der Kupplungseinrichtung 1 die Dichtungshülse 46, die unter der Vorspannung der Schraubendruckfeder 44 steht, nachgeführt und liegt damit im Anfangsstadium des Entfernens des Schmiernippelkopfs 3 weiter an diesem an. Ferner werden Druckstöße aus der Schmierpresse, die aufgrund des hohen Drucks an der Schmierpresse auch im Bereich des Drehanschlusses 18 anstehen, aufgrund des relativ geringen Durchmessers des Durchgangsabschnitts 42 minimiert. Hierdurch wird auch die Beanspruchung der Bauteile innerhalb des Grundkörpers 7, konkret Kugel 45, Schraubendruckfeder 44 und Dichtungshülse 46 minimiert.

Das Rückschlagventil mit der Kugel 45 hat die Aufgabe, ein Austreten von Schmiermittel zu verhindern, wenn die Kupplungseinrichtung an eine Schmiermittelpresse angeschlossen ist, ohne dass über diese Druck ausgeübt wird.

Wie der Darstellung der Fig. 7 zu entnehmen ist, weist das Schiebeteil 26 über dessen gesamte Länge einen konstanten Außendurchmesser C auf. Dieser beträgt 15 mm. Demzufolge kann die Kupplungseinrichtung 1 auch bei einem Schmiernippel 2 Verwendung finden, das in einem Bauteil zurückgesetzt angeordnet ist, mit einem von außen zugänglichen Bohrungsabschnitt im Bauteil, der einen Durchmesser besitzt, der geringfügig größer ist als 15 mm ist.

### Bezugszeichenliste

- 1: Kupplungseinrichtung
- 2: Schmiernippel
- 3: Schmiernippelkopf
- 4: Gewindeabschnitt
- 5: Kegelstumpfabschnitt
- 6: Zwischenabschnitt
- 7: Grundkörper
- 8: Einlassöffnung
- 9: Auslassöffnung
- 10: Durchgang
- 11: Klemmbacken
- 12: Schiebehülse
- 13: Schraubendruckfeder
- 14: Stellmittel/Handhebel
- 15: innerer Kontaktabschnitt
- 16: Längsmittelachse
- 17: Gegenkontaktabchnitt
- 18: Drehanschluss
- 19: Sicherungsring
- 20: Dichtungsring
- 21: Lagerachse
- 22: Seitenflanke
- 23: Steg
- 24: Lagerachse
- 25: Vorspannhülse
- 26: Schiebeteil
- 27: Schiebeteil
- 28: Mantelabschnitt
- 29: Ansatz
- 30: Ansatz
- 31: Außennut
- 32: Ansatz
- 33: Vorsprung
- 34: Stirnfläche
- 35: Aussparung
- 36: Abschnitt
- 37: Abschnitt
- 38: Abschnitt
- 39: Abschnitt
- 40: Kante
- 41: Freiraum
- 42: Durchgangsabschnitt
- 43: Durchgangsabschnitt
- 44: Schraubendruckfeder
- 45: Kugel
- 46: Dichtungshülse
- 47: Zwischenhülse
- 48: Nut
- 49: Kugel
- 50: Loch
- 51: Stirnfläche
- 52: Schräge
- 53: Stirnfläche

## Patentansprüche

1. Kupplungseinrichtung (1) zum Verbinden mit einem Schmiernippel (2) im Bereich eines Schmiernippelkopfs (3), mit einem Grundkörper (7), der eine Einlassöffnung (8) und eine Auslassöffnung (9) sowie einen die Einlassöffnung (8) und die Auslassöffnung (9) verbindenden Durchgang (10) aufweist, ferner mit, bezogen auf den Durchgang (10), außen in dem Grundkörper (7) schwenkbar gelagerten Klemmbacken (11), die um den Durchgang (10) herum angeordnet sind, wobei die Klemmbacken (11) über die Auslassöffnung (9) vorstehen und in einer ersten Stellung eingeschwenkt sind, zum Hintergreifen des Schmiernippelkopfs (3), sowie in einer zweiten Stellung ausgeschwenkt sind, zum Freigeben des Schmiernippelkopfs (3), ferner mit einer in dem Grundkörper (7) verschieblich gelagerten Schiebehülse (12), wobei die Schiebehülse (12) entgegen einer Federkraft mittels eines im Grundkörper (7) und der Schiebehülse (12) gelagerten Stellmittels (14) von einer ersten Stellung, in der die Schiebehülse (12) die Klemmbacken (11) in deren ersten Stellung festlegt, in eine zweite Stellung, in der die Schiebehülse (12) die in der ersten Stellung befindlichen Klemmbacken (11) freigibt, überführbar ist, **dadurch gekennzeichnet, dass** die Schiebehülse (12) einen inneren Kontaktabschnitt (15) aufweist, der parallel zur Bewegungsrichtung (A) der Schiebehülse (12) bei deren Verschieben angeordnet ist, wobei der innere Kontaktabschnitt (15) in der ersten Stellung der Klemmbacken (11) an parallel zum inneren Kontaktabschnitt (15) positionierten Gegenkontaktabschnitten (17) der Klemmbacken (11) anliegt, sowie die Schiebehülse (12) beim Bewegen in deren zweite Stellung von der Einlassöffnung (8) des Grundkörpers (7) weg in eine Außerkontaktstellung von innerem Kontaktabschnitt (15) und Gegenkontaktabschnitten (17) bewegt wird, wobei ein Federmittel (13) vorgesehen ist, das die Klemmbacken (11) in deren erste Stellung vorspannt wobei zwischen dem Grundkörper (7) und der Schiebehülse (12) eine Vorspannhülse (25) angeordnet ist, die in der Bewegungsrichtung (A) der Schiebehülse (12) verschieblich ist, wobei die Vorspannhülse (25) auf die Klemmbacken (11) einwirkt und diese in deren erste Stellung vorspannt, wobei das Federmittel (13), zwischen der Schiebehülse (12) und der Vorspannhülse (25) wirksam ist, wobei die Klemmbacken (11) im Bereich von der Einlassöffnung (8) des Grundkörpers (7) zugewandten Enden in einer Außennut (31) des Grundkörpers (7), in Bewegungsrichtung (A) der Schiebehülse (12) festgelegt, schwenkbar gelagert sind sowie die Vorspannhülse (25) in einem ein Schwenkmoment erzeugenden Abstand zur Schwenkachse (40) des jeweiligen Klemmbackens (11) auf diesen einwirkt.

2. Kupplung nach Anspruch 1, **dadurch gekennzeichnet, dass** ein als Schraubendruckfeder ausgebildetes Federmittel (13) zwischen der Schiebehülse (12) und der Vorspannhülse (25) wirksam ist.

3. Kupplungseinrichtung nach einem der Ansprüche 1 bis 2, **dadurch gekennzeichnet, dass** die Schiebehülse (12) innen einen umlaufenden Freiraum (41) zur Aufnahme der Klemmbacken (11) in deren zweiten Stellung aufweist, insbesondere der Freiraum (41) derart gestaltet ist, dass eine Schwenkbewegung der Klemmbacken (11) über deren zweiten Stellung hinaus blockiert ist.

4. Kupplungseinrichtung nach einem der Ansprüche 1 bis 3, **dadurch gekennzeichnet, dass** die Klemmbacken (11) im Bereich von der Einlassöffnung (8) abgewandten Enden einen nach radial innen gerichteten Ansatz (30) zum Hintergreifen des Schmiernippelkopfes (3) in der ersten Stellung der Klemmbacken (11) aufweisen.

5. Kupplungseinrichtung nach Anspruch 4, **dadurch gekennzeichnet, dass** die Klemmbacken (11) im Bereich deren der Einlassöffnung (8) abgewandten Enden in der ersten und der zweiten Stellung der Klemmbacken (11) vollständig innerhalb der Schiebehülse (12) angeordnet sind.

6. Kupplungseinrichtung nach Anspruch 5, **dadurch gekennzeichnet, dass** die Schiebehülse (12) im Bereich dessen der Einlassöffnung (8) des Grundkörpers (7) abgewandten Endes einen nach radial innen gerichteten, insbesondere umlaufenden Ansatz (29) aufweist, wobei der Ansatz (29) die Klemmbacken (11) im Bereich von der Einlassöffnung (8) des Grundkörpers (7) abgewandten Stirnflächen (54) hintergreift, insbesondere in den ersten Stellungen der Schiebehülse (12) und der Klemmbacken (11) an diesen Stirnflächen (54) anliegt.

7. Kupplungseinrichtung nach einem der Ansprüche 1 bis 6, **dadurch gekennzeichnet, dass** der Grundkörper (7) im Bereich des Durchgangs (10) eine im Grundkörper (7) und/oder einer Zwischenhülse (47) verschiebbar gelagerte elastische Dichtungshülse (46) aufnimmt, die unter Einwirkung einer Federkraft in Richtung der Auslassöffnung (9) des Grundkörpers (7) gegen einen grundkörperseitigen Anschlag (48, 49, 50, 7) vorgespannt ist.

8. Kupplungseinrichtung nach Anspruch 7, **dadurch gekennzeichnet, dass** die auf die Dichtungshülse (46) einwirkende Federkraft durch eine Schraubendruckfeder (44) erzeugt wird, die zwischen der Dichtungshülse (46) und dem Grundkörper (7) wirksam ist, insbesondere sich die Schraubendruckfeder (44) an der Dichtungshülse (46) und einer Kugel (45) abstützt, wobei die Kugel (45) in der Schließstellung einen der Einlassöffnung (8) des Grundkörpers (7) zugewandten Abschnitt (42) des Durchgangs (10) verschliesst.

9. Kupplungseinrichtung nach einem der Ansprüche 1 bis 8, **dadurch gekennzeichnet, dass** ein stromaufwärtiger Abschnitt (42) des Durchgangs (10) einen geringeren Durchmesser aufweist als ein stromabwärtiger Abschnitt (43) des Durchgangs (10).

10. Kupplungseinrichtung nach einem der Ansprüche 7 bis 9, **dadurch gekennzeichnet, dass** die Zwischenhülse (47), insbesondere eine metallische Zwischenhülse (47), zwischen der Dichtungshülse (46) und dem Grundkörper (7) angeordnet ist, wobei die Zwischenhülse (47) außen in deren Längsrichtung verlaufende Führungen (48) für Wälzelemente (49), insbesondere für Kugeln (49) aufweist, die in Schieberichtung (A) der Zwischenhülse (47) und nach radial außen festgelegt sind, insbesondere nach radial außen mittels der Vorspannhülse (25) festgelegt sind.

11. Kupplungseinrichtung nach einem der Ansprüche 1 bis 10, **dadurch gekennzeichnet, dass** das Stellmittel (14) ein manuell verstellbares Stellmittel (14) ist, insbesondere ein Schwenkhebel ist, der schwenkbar im Grundkörper (7) und, in Abstand zur Schwenkachse (21) im Grundkörper (7), schwenkbar in der Schiebehülse (12) gelagert ist.

12. Kupplungseinrichtung nach einem der Ansprüche 1 bis 11, **dadurch gekennzeichnet, dass** die Schiebehülse (12), ausgehend von deren der Einlassöffnung (8) des Grundkörpers (7) abgewandten Ende, bis über eine Länge von mehr als 20 mm, insbesondere bis zu 60 mm einen konstanten Außendurchmesser von maximal 15 mm aufweist.

## Claims

1. Coupling device (1) for connecting to a lubricating nipple (2) in the region of a lubricating nipple head (3), having a main body (7) which has an inlet opening (8) and an outlet opening (9) and a passage (10) which connects the inlet opening (8) and the outlet opening (9), having, furthermore, clamping jaws (11) which are mounted pivotably in the main body (7) on the outside, in relation to the passage (10), and are arranged around the passage (10), the clamping jaws (11) projecting beyond the outlet opening (9) and being pivoted in in a first position, in order to engage behind the lubricating nipple head (3), and being pivoted out in a second position, in order to release the lubricating nipple head (3), having, furthermore, a sliding sleeve (12) which is mounted displaceably in the main body (7), it being possible for the sliding sleeve (12) to be transferred counter to a spring force by means of an actuating means (14) which is mounted in the main body (7) and the sliding sleeve (12) from a first position, in which the sliding sleeve (12) fixes the clamping jaws (11) in their first position, into a second position, in which the sliding sleeve (12) releases the clamping jaws (11) which are situated in the first position, **characterized in that** the sliding sleeve (12) has an inner contact section (15) which is arranged parallel to the movement direction (A) of the sliding sleeve (12) during its displacement, the inner contact section (15) bearing, in the first position of the clamping jaws (11) against counter-contact sections (17) of the clamping jaws (11), which counter-contact sections (17) are positioned parallel to the inner contact section (15), and the sliding sleeve (12) being moved, during the movement into its second position, away from the inlet opening (8) of the main body (7) into an out-of-contact position of the inner contact section (15) and the counter-contact sections (17), a spring means (13) being provided which prestresses the clamping jaws (11) into their first position, a prestressing sleeve (25) being arranged between the main body (7) and the sliding sleeve (12), which prestressing sleeve (25) can be displaced in the movement direction (A) of the sliding sleeve (12), the prestressing sleeve (25) acting on the clamping jaws (11) and prestressing the latter into their first position, the spring means (13) being active between the sliding sleeve (12) and the prestressing sleeve (25), the clamping jaws (11) being mounted pivotably, in the region of ends which face the inlet opening (8) of the main body (7), in an outer groove (31) of the main body (7), in a manner which is fixed in the movement direction (A) of the sliding sleeve (12), and the prestressing sleeve (25) acting on the respective clamping jaw (11) at a spacing from the pivot axis (40) of the said respective clamping jaw (11), which spacing generates a pivoting moment.

2. Coupling according to Claim 1, **characterized in that** a spring means (13) which is configured as a compression coil spring is active between the sliding sleeve (12) and the prestressing sleeve (25).

3. Coupling device according to either of Claims 1 and 2, **characterized in that**, on the inside, the sliding sleeve (12) has a circumferential clearance (41) for receiving the clamping jaws (11) in their second position, and, in particular, the clearance (41) is designed in such a way that a pivoting movement of the clamping jaws (11) beyond their second position is blocked.

4. Coupling device according to one of Claims 1 to 3, **characterized in that**, in the region of ends which face away from the inlet opening (8), the clamping jaws (11) have a radially inwardly directed lug (30) for engaging behind the lubricating nipple head (3) in the first position of the clamping jaws (11).

5. Coupling device according to Claim 4, **characterized in that**, in the region of their ends which face away from the inlet opening (8), the clamping jaws (11) are arranged completely within the sliding sleeve (12) in the first and the second position of the clamping jaws (11).

6. Coupling device according to Claim 5, **characterized in that**, in the region of its end which faces away from the inlet opening (8) of the main body (7), the sliding sleeve (12) has a radially inwardly directed, in particular circumferential lug (29), the lug (29) engaging behind the clamping jaws (11) in the region of end faces (54) which face away from the inlet opening (8) of the main body (7), in particular bearing against the said end faces (54) in the first positions of the sliding sleeve (12) and the clamping jaws (11).

7. Coupling device according to one of Claims 1 to 6, **characterized in that**, in the region of the passage (10), the main body (7) receives an elastic sealing sleeve (46) which is mounted displaceably in the main body (7) and/or an intermediate sleeve (47) and is prestressed against a main body-side stop (48, 49, 50, 7) under the action of a spring force in the direction of the outlet opening (9) of the main body (7).

8. Coupling device according to Claim 7, **characterized in that** the spring force which acts on the sealing sleeve (46) is generated by way of a compression coil spring (44) which is active between the sealing sleeve (46) and the main body (7) and, in particular, the compression coil spring (44) is supported on the sealing sleeve (46) and a ball (45), the ball (45) closing, in the closed position, a section (42) of the passage (10), which section (42) faces the inlet opening (8) of the main body (7).

9. Coupling device according to one of Claims 1 to 8, **characterized in that** an upstream section (42) of the passage (10) has a smaller diameter than a downstream section (43) of the passage (10).

10. Coupling device according to one of Claims 7 to 9, **characterized in that** the intermediate sleeve (47), in particular a metallic intermediate sleeve (47), is arranged between the sealing sleeve (46) and the main body (7), the intermediate sleeve (47) having guides (48) which run on the outside in their longitudinal direction for rolling elements (49), in particular for balls (49), which are fixed in the pushing direction (A) of the intermediate sleeve (47) and radially to the outside, in particular are fixed radially to the outside by means of the prestressing sleeve (25).

11. Coupling device according to one of Claims 1 to 10, **characterized in that** the actuating means (14) is a manually adjustable actuating means (14), in particular is a pivoting lever which is mounted pivotably in the main body (7) and, at a spacing from the pivot axis (21) in the main body (7), is mounted pivotably in the sliding sleeve (12).

12. Coupling device according to one of Claims 1 to 11, **characterized in that**, starting from its end which faces away from the inlet opening (8) of the main body (7), the sliding sleeve (12) has a constant external diameter of at most 15 mm over up to a length of more than 20 mm, in particular up to 60 mm.

## Revendications

1. Dispositif d'accouplement (1) pour la connexion à un raccord de lubrification (2) dans la région d'une tête de raccord de lubrification (3), comprenant un corps de base (7) qui présente une ouverture d'entrée (8) et une ouverture de sortie (9) ainsi qu'un passage (10) reliant l'ouverture d'entrée (8) et l'ouverture de sortie (9), et comprenant en outre des mâchoires de serrage (11) supportées de manière pivotante dans le corps de base (7), situées à l'extérieur par rapport au passage (10), qui sont disposées autour du passage (10), les mâchoires de serrage (11) faisant saillie au-delà de l'ouverture de sortie (9) et étant refermées par pivotement dans une première position, pour venir en prise par l'arrière avec la tête de raccord de lubrification (3), et étant ouvertes par pivotement dans une deuxième position pour libérer la tête de raccord de lubrification (3), et comprenant en outre un manchon coulissant (12) supporté de manière déplaçable dans le corps de base (7), le manchon coulissant (12) pouvant être transféré à l'encontre d'une force de ressort au moyen d'un actionneur (14) supporté dans le corps de base (7) et dans le manchon coulissant (12) depuis une première position dans laquelle le manchon coulissant (12) fixe les mâchoires de serrage (11) dans leur première position, dans une deuxième position dans laquelle le manchon coulissant (12) libère les mâchoires de serrage (11) se trouvant dans la première position, **caractérisé en ce que** le manchon coulissant (12) présente une portion de contact intérieure (15) qui est disposée parallèlement à la direction de déplacement (A) du manchon coulissant (12) lors de son déplacement, la portion de contact intérieure (15) s'appliquant, dans la première position des mâchoires de serrage (11), contre des portions de contact conjuguées (17) des mâchoires de serrage (11) positionnées parallèlement à la portion de contact intérieure (15), et le manchon coulissant (12), lors de son déplacement dans sa deuxième position, étant déplacé depuis la position d'entrée (8) du corps de base (7) dans une position hors contact de la portion de contact intérieure (15) et des portions de contact conjuguées (17), un moyen de ressort (13) étant prévu, lequel précontraint les mâchoires de serrage (11) dans leur première position, une douille de précontrainte (25) étant disposée entre le corps de base (7) et le manchon coulissant (12), laquelle peut être déplacée dans la direction de déplacement (A) du manchon coulissant (12), la douille de précontrainte (25) agissant sur les mâchoires de serrage (11) et les précontraignant dans leur première position, le moyen de ressort (13) agissant entre le manchon coulissant (12) et la douille de précontrainte (25), les mâchoires de serrage (11) étant supportées de manière pivotante dans la région d'extrémités tournées vers l'ouverture d'entrée (8) du corps de base (7) dans une rainure extérieure (31) du corps de base (7), de manière fixée dans la direction de déplacement (A) du manchon coulissant (12), et la douille de précontrainte (25) agissant sur la mâchoire de serrage (11) respective à une distance à l'axe de pivotement (40) de ladite mâchoire de serrage générant un couple de pivotement.

2. Accouplement selon la revendication 1, **caractérisé en ce qu'**un moyen de ressort (13) réalisé sous forme de ressort de compression à boudin agit entre le manchon coulissant (12) et la douille de précontrainte (25).

3. Dispositif d'accouplement selon l'une quelconque des revendications 1 à 2, **caractérisé en ce que** le manchon coulissant (12) présente à l'intérieur un espace libre périphérique (41) pour recevoir les mâchoires de serrage (11) dans leur deuxième position, en particulier l'espace libre (41) étant configuré de telle sorte qu'un mouvement de pivotement des mâchoires de serrage (11) au-delà de leur deuxième position soit bloqué.

4. Dispositif d'accouplement selon l'une quelconque des revendications 1 à 3, **caractérisé en ce que** les mâchoires de serrage (11) présentent, dans la région d'extrémités tournées vers l'ouverture d'entrée (8), une pièce (30) orientée radialement vers l'intérieur pour venir en prise par l'arrière avec la tête de raccord de lubrification (3) dans la première position des mâchoires de serrage (11) .

5. Dispositif d'accouplement selon la revendication 4, **caractérisé en ce que** les mâchoires de serrage (11) sont disposées, dans la région de leurs extrémités opposées à l'ouverture d'entrée (8), dans la première et la deuxième position des mâchoires de serrage (11), complètement à l'intérieur du manchon coulissant (12).

6. Dispositif d'accouplement selon la revendication 5, **caractérisé en ce que** le manchon coulissant (12) présente, dans la région de son extrémité opposée à l'ouverture d'entrée (8) du corps de base (7), une pièce (29) orientée radialement vers l'intérieur, en particulier périphérique, la pièce (29) venant en prise par l'arrière avec les mâchoires de serrage (11) dans la région de surfaces frontales (54) opposées à l'ouverture d'entrée (8) du corps de base (7), en particulier dans les premières positions du manchon coulissant (12) et des mâchoires de serrage (11), s'appliquant sur ces surfaces frontales (54).

7. Dispositif d'accouplement selon l'une quelconque des revendications 1 à 6, **caractérisé en ce que** le corps de base (7), dans la région du passage (10), reçoit une douille d'étanchéité élastique (46) supportée de manière déplaçable dans le corps de base (7) et/ou dans une douille intermédiaire (47), laquelle douille d'étanchéité est précontrainte sous l'effet d'une force de ressort, dans la direction de l'ouverture de sortie (9) du corps de base (7), contre une butée du côté du corps de base (48, 49, 50, 7).

8. Dispositif d'accouplement selon la revendication 7, **caractérisé en ce que** la force de ressort agissant sur la douille d'étanchéité (46) est produite par un ressort de compression à boudin (44) qui agit entre la douille d'étanchéité (46) et le corps de base (7), en particulier le ressort de compression à boudin (44) s'appuie contre la douille d'étanchéité (46) et contre une bille (45), la bille (45), dans la position de fermeture, fermant une portion (42) du passage (10) tournée vers l'ouverture d'entrée (8) du corps de base (7).

9. Dispositif d'accouplement selon l'une quelconque des revendications 1 à 8, **caractérisé en ce qu'**une portion amont (42) du passage (10) présente un diamètre plus petit qu'une portion aval (43) du passage (10).

10. Dispositif d'accouplement selon l'une quelconque des revendications 7 à 9, **caractérisé en ce que** la douille intermédiaire (47), en particulier une douille intermédiaire métallique (47), est disposée entre la douille d'étanchéité (46) et le corps de base (7), la douille intermédiaire (47) présentant des guides (48) pour des éléments de roulement (49), en particulier pour des billes (49), s'étendant à l'extérieur dans sa direction longitudinale, qui sont fixés dans la direction de coulissement (A) de la douille intermédiaire (47) et radialement vers l'extérieur, en particulier qui sont fixés radialement vers l'extérieur au moyen de la douille de précontrainte (25).

11. Dispositif d'accouplement selon l'une quelconque des revendications 1 à 10, **caractérisé en ce que** l'actionneur (14) est un actionneur réglable manuellement (14), en particulier un levier pivotant, qui est supporté de manière pivotante dans le corps de base (7), et, à distance de l'axe de pivotement (21) dans le corps de base (7), est supporté de manière pivotante dans le manchon coulissant (12).

12. Dispositif d'accouplement selon l'une quelconque des revendications 1 à 11, **caractérisé en ce que** le manchon coulissant (12), partant de son extrémité opposée à l'ouverture d'entrée (8) du corps de base (7), jusqu'à une longueur de plus de 20 mm, en particulier jusqu'à 60 mm, présente un diamètre extérieur constant de 15 mm maximum.
